# EUROPÄISCHE PATENTANMELDUNG

(11) **EP 0 971 134 A2**
(43) Veröffentlichungstag der Anmeldung: **12.01.2000**
(21) Anmeldenummer: 99112512.1
(22) Anmeldetag: 01.07.1999
(51) Int. Cl.: F15B 13/16

(54) **Stellventil**

(30) Priorität: 06.07.1998 DE 19830084
(71) Anmelder: ARI-ARMATUREN ALBERT RICHTER GmbH & Co.KG., 33758 Schloss Holte-Stukenbrock (DE)
(72) Erfinder: Dunsche, Rudolf, 33758 Schloss Holte-Stukenbrock (DE); Ashton, Alan, 33758 Schloss Holte-Stukenbrock (DE); Seppendorf, Volker, 33758 Schloss Holte-Stukenbrock (DE)
(74) Vertreter: Stracke, Alexander, Dipl.-Ing.

(57) **Zusammenfassung**

Ein Stellventil, mit einem Ventilgehäuse (1), an dem ein Joch (4) befestigt ist, das einen pneumatisch betriebenen Stellantrieb 3 trägt, der an eine Ventilspindel (7) angeschlossen ist, mit der ein die Durchflußmenge beeinflussender, im Ventilgehäuse (1) angeordneter Ventilkegel betätigbar ist, und mit einem Stellungsregler (3), der mit dem Stellantrieb (2) pneumatisch in Wirkverbindung steht, ist so ausgebildet, daß an dem Joch (4) ein Anschlußstück (6) befestigt ist, an dem der Stellungsregler (3) angeflanscht ist, wobei in dem Anschlußstück (6) eine Luftzuführbohrung (9) vorgesehen ist, die zum einen mit dem Stellungsregler (3) und zum anderen mit dem Stellantrieb (2) korrespondiert.

## Beschreibung

Die vorliegende Erfindung betrifft ein Stellventil gemäß dem Oberbegriff des Anspruchs 1.

Ein derartiges Steilventil ist beispielsweise aus der DE 197 09 883 A1 bekannt.

Bei dem darin gezeigten und beschriebenen Steilventil, aber auch bei anderen bekannten, ist der Stellungsregler unmittelbar am Joch befestigt.

Die Luft zur regelnden Betätigung des Stellantriebs wird dabei durch Bohrungen geführt, die im Joch vorgesehen sind und die einerseits mit dem Stellungsregler und andererseits mit dem Stellantrieb in Verbindung stehen.

Diese Art der Luftzuführung erfordert zum einen eine bestimmte Form des Jochs, die eine entsprechende Bearbeitung erst möglich macht, zum anderen die notwendige Bearbeitung selbst, die recht aufwendig ist und die Herstellung des Stellventil insgesamt teuer werden läßt.

Da eine Vielzahl von Stellungsreglern angeboten werden, die jedoch im wesentlichen unterschiedliche Außen- und Anschlußabmaße aufweisen, muß in jedem Fall eine individuelle Anpassung des Jochs bzw. der Luftzuführungsbohrungen an den gewünschten Stellungsregler erfolgen.

Im Grunde kann die Fertigung eines Stellventils nur dann erfolgen, wenn dessen Verwender zuvor festgelegt hat, welcher Stellungsregler eingesetzt werden soll. Eine vom Umfang her weitgehende Vorfertigung der Stellventile ist damit praktisch nicht möglich.

Der vorliegenden Erfindung liegt daher die Aufgabe zugrunde, ein Stellventil der gattungsgemäßen Art so zu gestalten, daß die Vorfertigungsmöglichkeit in ihrem Umfang verbessert und die Herstellung vereinfacht und damit kostengünstiger wird.

Diese Aufgabe wird durch ein Stellventil gelöst, das die Merkmale des Anspruchs 1 aufweist.

Durch diese konstruktive Ausgestaltung des Stellventils kann nun eine zusätzliche Bearbeitung des Jochs zum Zwecke der Einbringung von Luftzuführungsbohrungen vollständig unterbleiben.

Neben der Möglichkeit, das Stellventil in einem erheblichen Umfang weiter vorzufertigen als dies bisher möglich war, kann auch die Gestaltung des Jochs unabhängig von der Rücksichtnahme auf den Platzbedarf von Luftzuführungsbohrungen erfolgen, was einen größeren Freiheitsgrad für andere funktionsbedingte Erfordernisse mit sich bringt.

Darüber hinaus läßt sich das Anschlußstück aufgrund seiner kompakten Bauweise wesentlich einfacher bearbeiten, insbesondere hinsichtlich der Einbringung von Luftzuführungsbohrungen, als dies beim Joch der Fall ist.

Aber auch der Austausch bereits installierter Stellungsregler ist ohne weiteres möglich, da lediglich ein an den neuen Stellungsregler angepaßtes Anschlußstück einzubauen ist, was durch geringe Montagearbeiten realisiert werden kann.

Nach einer vorteilhaften Ausgestaltung der Erfindung ist vorgesehen, daß das Anschlußstück Befestigungsmittel aufweist, beispielsweise Gewindebohrungen, an denen ein Schutzgehäuse befestigbar ist, durch das der zwischen dem Ventilgehäuse und dem Stellantrieb gebildete Freiraum abgekapselt wird.

Durch das Schutzgehäuse wird verhindert, daß unbeabsichtigt in den Wirkbereich der Ventilspindel eingegriffen werden kann, so daß daraus resultierende Verletzungsgefahren ausgeschlossen sind.

Das Schutzgehäuse bietet überdies einen Schutz vor äußeren Einflüssen, wie Verschmutzung, mechanischen Eingriffen oder dergleichen.

Weitere vorteilhafte Ausgestaltungen der Erfindung sind in den Unteransprüchen gekennzeichnet.

Ein Ausführungsbeispiel der Erfindung wird nachfolgend anhand der beigefügten Zeichnungen beschreiben.

Es zeigen:
- Figur 1: ein erfindungsgemäßes Stellventil in einer teilweise geschnittenen Seitenansicht,
- Figur 2: ein Anschlußstück des Stellventiles in einer teilweise geschnittenen Vorderansicht,
- Figur 3: das Anschlußstück in einer Draufsicht,
- Figur 4: das Anschlußstück in einer teilweise geschnittenen Seitenansicht.

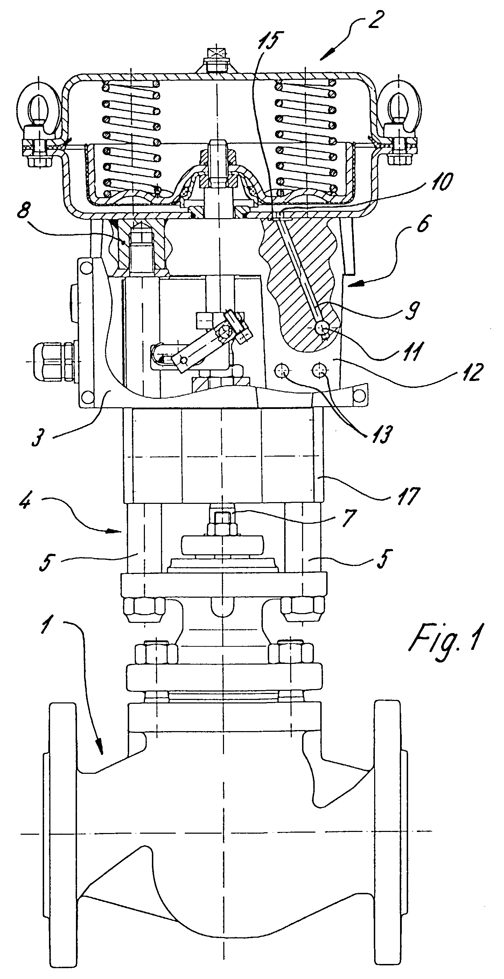

In der Figur 1 ist ein Steilventil dargestellt, das in seinem Grundaufbau aus einem Ventilgehäuse 1, einem darin angeordneten, nicht erkennbaren Ventilkegel zur Regulierung der Durchflußmenge, einer Ventilspindel 7, die mit dem Ventilkegel verbunden ist und einem Stellantrieb 2 besteht, über den pneumatisch die Ventilspindel 7 betätigbar ist.

Der Stellantrieb 2 ist oberseitig an ein aus Säulen 5 bestehendes Joch 4 angeschlossen, das unterseitig mit dem Ventilgehäuse 1 verbunden ist.

Dabei sind die Säulen 5 in Zapfen 8 des Stellantriebes 2 eingeschraubt.

An dem Joch 4 ist ein Anschlußstück 6 befestigt, an dem wiederum ein Stellungsregler 3 angeflanscht ist, der mit dem Stellantrieb 2 in Wirkverbindung steht und über den dessen Regelung pneumatisch möglich ist.

Das Anschlußstück 6 ist zwischen den Zapfen 8 und den Säulen 5 festgeklemmt, wozu in einem Boden des Anschlußstückes 6 Durchgangsbohrungen 15 vorgesehen sind, die von Gewindezapfen der Säulen 5 durchtreten werden, die in die Zapfen 8 eingeschraubt sind. Dabei stützen sich die Zapfen 8 am Boden des Anschlußstückes 6 ab, während eine umlaufende Wandung 14 des Anschlußstückes 6 an der Unterseite des Stellantriebes 2 anliegt.

Der Stellungsregler 3 ist an einer Befestigungslasche 12 des Anschlußstückes 6 festgeschraubt. Hierzu sind in der Befestigungslasche 12 Befestigungsbohrungen 13 vorgesehen, durch die nicht dargestellte Schrauben geführt sind, die in den Stellungsregler 3 eingedreht sind.

Zur Übertragung der Steuerungsluft zwischen dem Stellungsregler 3 und dem Stellantrieb 2 ist in dem Anschlußstück 6 eine Luftzuführbohrung 9 vorgesehen, die in eine Lufteintrittsbohrung 11 mündet, die mit einer Luftaustrittsöffnung des Stellungsreglers 3 korrespondiert.

Im Bereich des Stellantriebes 2 mündet die Luftzuführbohrung 9 in eine Anschlußbohrung 10 des Gehäuses des Stellantriebes 2, wobei sowohl dieser Übergangsbereich wie auch der der Lufteintrittsöffnung 11 zur Luftaustrittsöffnung des Stellungsreglers 3 entsprechend abgedichtet ist, um Luftverluste zu vermeiden.

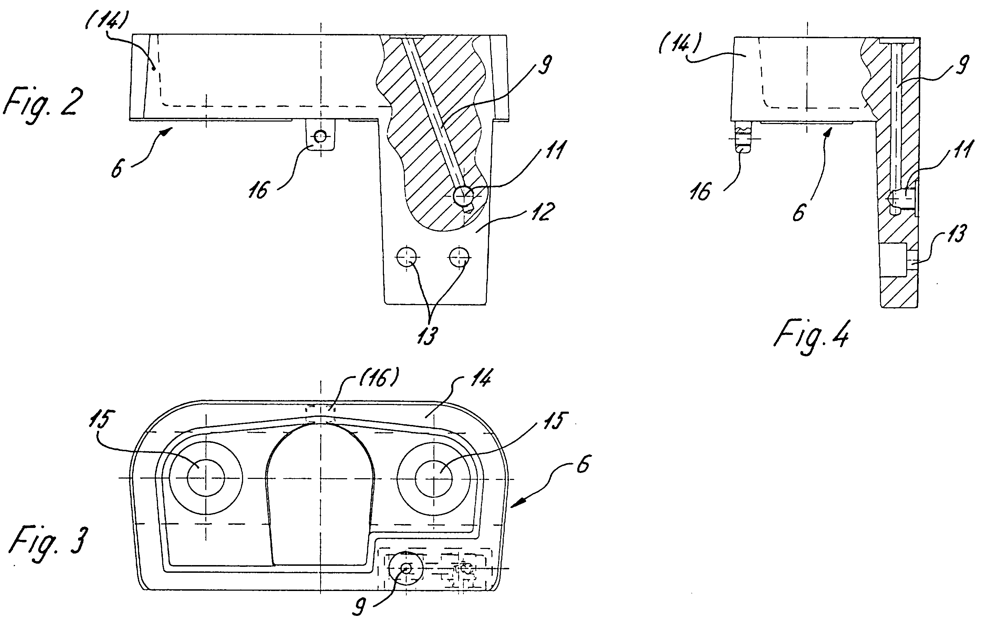

Wie insbesondere die Figuren 2 bis 4 sehr deutlich zeigen, weist das Anschlußstück 6 im Bodenbereich ein Befestigungsauge 16 auf, an dem ein Schutzgehäuse 17 befestigt ist, durch das der nicht durch den Stellungsregler 3 abgedeckte Innenraum, der durch das Joch 4 gebildet wird, weitgehend abgekapselt wird, so daß dieser Innenraum zum einen vor einem Zugriff und zum anderen vor äußeren Einflüssen, wie Verschmutzungen oder mechanischen Eingriffen geschützt ist.

### Bezugszeichenliste

- 1: Ventilgehäuse
- 2: Stellantrieb
- 3: Stellungsregler
- 4: Joch
- 5: Säule
- 6: Anschlußstück
- 7: Venitlspindel
- 8: Zapfen
- 9: Luftzuführbohrung
- 10: Anschlußbohrung
- 11: Lufteintrittsbohrung
- 12: Befestigungslasche
- 13: Befestigungsbohrung
- 14: Wandung
- 15: Durchgangsbohrung
- 16: Befestigungsauge
- 17: Schutzgehäuse

## Patentansprüche

1. Stellventil mit einem Ventilgehäuse (1), an dem ein Joch (4) befestigt ist, das einen pneumatisch betriebenen Stellantrieb (2) trägt, der an eine Ventilspindel (7) angeschlossen ist, mit der ein die Durchflußmenge beeinflussender, im Ventilgehäuse (1) angeordneter Ventilkegel betätigbar ist, und mit einem Stellungsregler (3), der mit dem Stellantrieb pneumatisch in Wirkverbindung steht, **dadurch gekennzeichnet, daß** an dem Joch (4) ein Anschlußstück (6) befestigt ist, an dem der Stellungsregler (3) angeflanscht ist, wobei in dem Anschlußstück (6) eine Luftzuführbohrung (9) vorgesehen ist, die zum einen mit dem Stellungsregler (3) und zum anderen mit dem Stellantrieb (2) korrespondiert.

2. Stellventil nach Anspruch 1, **dadurch gekennzeichnet, daß** das Anschlußstück (6) zwischen dem Joch (4) und dem Stellantrieb (2) klemmend gehalten ist.

3. Stellventil nach Anspruch 1, **dadurch gekennzeichnet, daß** das Anschlußstück (6) eine Befestigungslasche (12) aufweist, an der der Stellungsregler (3) befestigt ist.

4. Stellventil nach Anspruch 1, **dadurch gekennzeichnet, daß** das Anschlußstück (6) ein Befestigungsauge aufweist, an dem ein Schutzgehäuse 17 befestigt ist, durch den der nach außen hin offene Zwischenraum zwischen dem Joch (4) und dem Stellantrieb (2) verkapselt ist.

5. Stellventil nach Anspruch 3, **dadurch gekennzeichnet, daß** die Befestigungslasche (12) Befestigungsbohrungen (13) aufweist, durch die mit dem Stellungsregler (3) verbundene Schrauben führbar sind.

6. Stellventil nach einem oder mehreren der Ansprüche 1 bis 5, **dadurch gekennzeichnet, daß** die Luftzuführbohrung (9) durch eine Wandung (14) des Anschlußstückes (6) sowie durch die Befestigungslasche (12) geführt ist.
